# EUROPEAN PATENT APPLICATION

(11) **EP 2 191 957 A1**
(43) Date of publication of application: **02.06.2010**
(21) Application number: 08792307.4
(22) Date of filing: 07.08.2008
(51) Int. Cl.: B29C 73/02

(54) **METHOD FOR RECOVERY OF SEALING AGENT FOR PUNCTUATION REPAIR**

(30) Priority: 17.08.2007 JP 2007212997
(71) Applicant: Bridgestone Corporation, Tokyo 104-8340 (JP)
(72) Inventor: MINOJIMA, Haruki, Tokyo 104-8340 (JP); HIRATA, Narukuni, Tokyo 104-8340 (JP); INOUE, Yusuke, Tokyo 104-8340 (JP); YOKOI, Takashi, Tokyo 104-8340 (JP); EGUCHI, Shinichi, Tokyo 104-8340 (JP)
(74) Representative: Whalley, Kevin
(86) International application number: PCT/JP2008/064250
(87) International publication number: WO 2009/025188

(57) **Abstract**

Disclosed is a method for recovering a sealing agent used for puncture repair, which includes the steps of: inserting an absorbent 26 capable of absorbing water contained in the sealing agent into the inside of a pneumatic tire 10 into which a sealing agent 16 used for puncture repair has been injected, wherein the sealing agent 16 includes a liquid component and a rubber latex dispersed in the liquid component; and collecting the solidified sealing agent 16A and the absorbent that has absorbed water from the inside of the pneumatic tire. Preferably, the absorbent is injected after injecting a flocculant 40 to cause the agglomeration and solidification of the rubber latex.

## Description

### Technical Field

The present invention relates to a method of recovering a sealing agent used for puncture repair and, in particular, to a method for recovery of the sealing agent used in a temporary repair when a pneumatic tire is punctured from the inside of the tire.

### Background Art

In a vehicle such as a passenger vehicle of recent years, there is a case in which it does not have any spare tire but is equipped with a puncture repair kit. When a pneumatic tire (hereinafter, referred to simply as "tire") fitted to such a vehicle is punctured, a sealing agent (repairing liquid) included in the puncture repair kit is injected into the punctured tire. The sealing agent is, in general, composed mainly of an aqueous solution in which a rubber latex is dispersed and to which a resin-base adhesive, a fiber material, an anti-freezing agent, a pH adjusting agent, an emulsifier or the like are added. When the puncture hole in a tire is blocked by such a sealing agent to repair the tire temporarily, it becomes possible for the vehicle to drive to a repair facility such as a service station.

In the repair facility, puncture of the tire repaired temporarily by the sealing agent is repaired and the repaired tire is again fitted to the vehicle or, depending on the state of the puncture hole, the punctured tire is disposed of without any repair. However, when the tire is removed from the wheel with the sealing agent remaining in the inside of the tire, the sealing agent is leaked out and contaminates a worker or a workplace. In addition, the sealing agent after use is required to be collected at one place and to be subject to liquid-waste treatment depending on its composition. Accordingly, it is necessary to withdraw the sealing agent from the inside of the tire prior to rim disengagement.

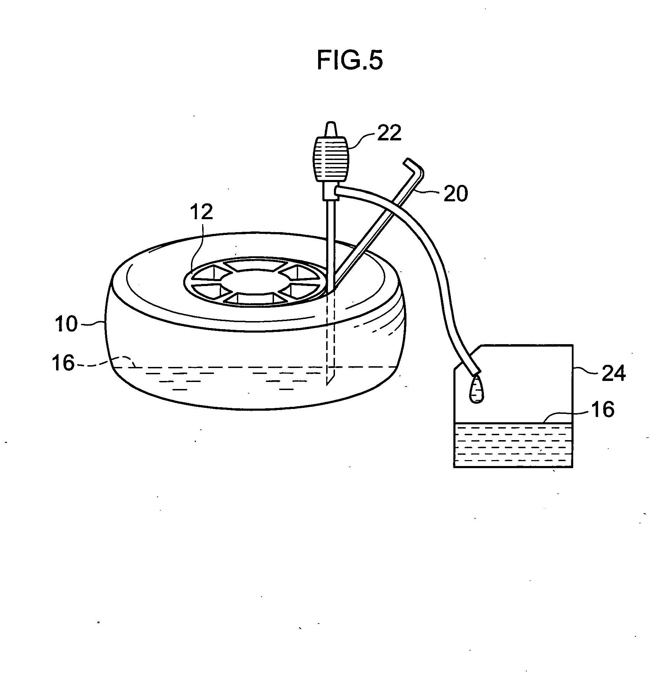

For example, as shown in Fig. 5, a hand pump 22 is inserted between the tire 10 and the wheel 12 in a state in which a bead of the tire 10 removed from the vehicle is opened by force with a tool 20 such as a claw bar, so that the sealing agent 16 inside the tire 10 is recovered into a waste liquid tank 24. A method in which a treatment agent such as a saturated saline solution is added to the recovered sealing agent 16 to flocculate a latex and then a solid component and a liquid component are separated through a mesh (solid-liquid separation) has been proposed (refer to Patent Document 1).

In addition, a method in which after a treatment agent such as a saline solution is injected to inside of the tire in which the sealing agent has been injected and then the solid-liquid separation is performed in the inside of the tire, these are recovered from the inside of the tire has been proposed (refer to Patent Document 2). In this method, the solid component such as a latex can be solidified (gelatinized) whereas the other component remains as liquid in the inside of the tire and hence when performing a tire rim disengagement operation, an operation of taking out the liquid component is necessary.

In addition, a method in which a polymer flocculant is injected into the inside of the tire and is adsorbed to the surface of the rubber particles of the sealing agent, whereby the resultant is attached to the inside wall of the tire as a gel-form agglomerate, has been proposed (refer to Patent Document 3). In this method, a network formed by the polymer flocculant and the rubber also contains water or the like, and the liquid component agglomerates and adheres to the inside wall of the tire in addition to the solid latex component.

Patent Document 1: Japanese Patent Application Laid-Open No. 2006-7748
Patent Document 2: Japanese Patent Application Laid-Open No. 2006-63204
Patent Document 3: Japanese Patent Application Laid-Open No. 2003-118009

### Disclosure of Invention

### Problem to be Solved by the Invention

An object of the invention is to provide a method which can easily recover the sealing agent used for puncture repair from the inside of a pneumatic tire.

### Means for Solving Problem

In order to accomplish the object, the present invention provides the following methods of recovering a sealing agent used for puncture repair.

<1> A method of recovering a sealing agent used for puncture repair, the method including: injecting an absorbent into the inside of a pneumatic tire into which the sealing agent used for puncture repair has been injected, the sealing agent comprising a rubber latex disperse in a liquid component and the absorbent absorbing water contained in the sealing agent; and recovering, from the inside of the pneumatic tire, the solidified sealing agent and the absorbent which has absorbed the water.

According to this method, since the solidified sealing agent and the absorbent which has absorbed the water contained in the sealing agent are recovered, it is possible to prevent the sealing agent from spattering, for example, when performing a rim disengagement operation, and to easily recover the sealing agent.

<2> A method of recovering a sealing agent used for puncture repair, including: injecting a flocculant into the inside of a pneumatic tire into which the sealing agent used for puncture repair has been injected, the sealing agent including a rubber latex dispersed in a liquid component and the flocculant agglomerating the rubber latex; injecting an absorbent into the inside of the pneumatic tire into which the flocculant has been injected, the absorbent absorbing any remaining liquid of the liquid component; and recovering, from the inside of the pneumatic tire, the rubber latex which has been agglomerated and solidified by injection of the flocculant and the absorbent which has absorbed the liquid component remaining after injection of the flocculant.

According to this method, which uses the flocculant and the absorbent concurrently, it is possible to prevent the sealing agent from spattering when performing a rim disengagement operation, and to more reliably recover the rubber latex and the liquid component contained in the sealing agent separately. Accordingly, it is possible to easily perform the recovery of the sealing agent and to easily perform treatments after the recovery.

<3> The method of recovering a sealing agent used for puncture repair described in <1> or <2>, in which any of silica gel, calcium carbonate, polyamide, carboxymethylcellulose or polyacrylate is injected as the absorbent.
The absorbent containing any of the above materials has high absorbing performance with respect to the sealing agent and it is possible to efficiently absorb the sealing agent with a relatively small amount.

<4> The method of recovering a sealing agent used for puncture repair described in <2> or <3>, in which a chemical containing at least one of a salt which is a reaction compound of an acid and a base or a water-soluble organic solvent is injected as the flocculant.
This kind of flocculant is widely available and enables reliable agglomeration of the rubber latex contained in the sealing agent.

### Effect of Invention

According to the present invention, a method which can easily recover a sealing agent used for puncture repair from the inside of the pneumatic tire is provided.

### Brief Description of Drawings

Fig. 1 is a schematic diagram showing one example of a method for injecting an absorbent according to the present invention into a tire.
Fig. 2 is a schematic diagram showing the absorbent injected into the inside of the tire.
Fig. 3 is a schematic diagram showing one example of a method for recovering the absorbent which has absorbed a sealing agent.
Fig. 4 is a schematic diagram showing one example of a method for injecting a flocculant according to the present invention into a tire.
Fig. 5 is a schematic diagram showing one example of a prior method for recovering the sealing agent in the inside of the tire.

### Best Mode for Carrying Out the Invention

Hereinafter, the invention will be specifically described with reference to the accompanying drawings.
First, a sealing agent for puncture repair (often referred to simply as "a sealing agent" in the specification) will be described. The sealing agent is configured such that a rubber latex is dispersed in a colloidal state in a liquid component such as water. Such a sealing agent is commercially available in various forms. A representative example includes one that is mainly composed of an aqueous solution containing a rubber latex such as an NR (natural rubber) latex, an SBR (styrene butadiene rubber) latex or an NBR (acrylonitrile-butadiene rubber) latex and to which a resin-base adhesive added in an aqueous dispersant state or an aqueous emulsion state has been added. Such an aqueous solution generally includes an anti-freezing agent such as a glycol, an ethylene glycol or a propylene glycol, a pH adjusting agent, an emulsifier, a stabilizer and the like. Furthermore, in order to increase the sealing properties with respect to the puncture hole, a fiber material composed of polyester, polypropylene, glass or the like, a filling agent (filler) composed of whisker, calcium carbonate, carbon black or the like, a silicate and polystyrene particles or the like are added, as necessary.

### First Embodiment

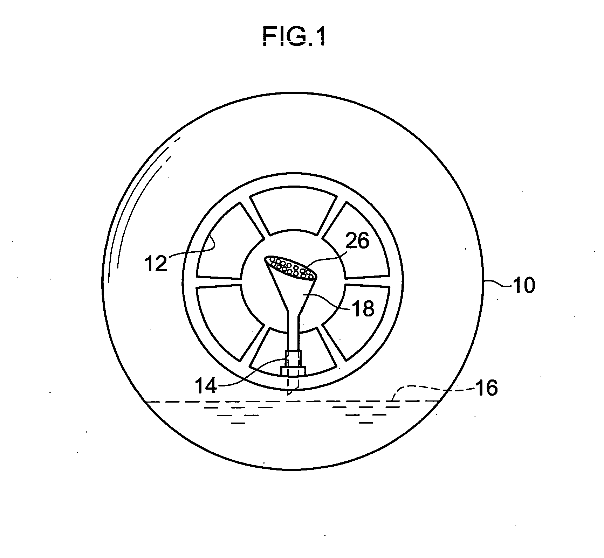

Figs. 1 to 4 show one example (first embodiment) of a procedure of a method for recovery of a sealing agent for puncture repair according to the present invention. A method for recovery of the sealing agent for puncture repair according to the present embodiment includes a step of injecting an absorbent 26, which absorbs the water contained in a sealing agent 16, into the inside of a pneumatic tire 10 into which a sealing agent 16 for puncture repair containing a rubber latex dispersed in a liquid component has been injected and a step of recovering, from the inside of the pneumatic tire 10, the solidified sealing agent 16A and the absorbent 26 which has absorbed the water.

### <Injection of absorbent>

The tire 10 in which a puncture hole has been temporarily repaired by the sealing agent 16 is removed together with the wheel 12 from a vehicle, and a valve core is taken out from a tire valve 14 of the tire 10. Next, an absorbent 26 is injected through the tire valve 14. Alternatively, the absorbent 26 may be injected by cutting the valve 14 itself. Although the method for injection of the absorbent 26 is not particularly limited, it is possible, for example, to inject the absorbent 26 by inserting an inlet of an injecting means 18 such as a funnel into the valve 14 as shown in Fig. 1. With such a method, it is possible to inject the absorbent 26 into the inside of the tire 10 easily and reliably.
In addition, as another method, it may be possible to employ a method in which an inserting tool such as a tire lever or a wedge is inserted between a bead section of the tire 10 and a rim to form a clearance and the absorbent 26 is injected through the clearance directly or via an injecting means such as a tube or a funnel, a method in which the absorbent 26 is injected by creating a hole in a tire 10, or the like.

Although the absorbent 26 is not particularly limited as long as it can absorb the water contained in the sealing agent 16 remaining inside of the tire 10, an absorbent 26 containing any material from among silica gel, calcium carbonate, polyamide, carboxymethylcellulose and polyacrylate is preferable. In particular, polyacrylate and carboxymethylcellulose are preferable. An absorbent 26 composed of any of these materials has excellent absorbency with respect to the sealing agent 16 and it is possible to sufficiently absorb the water contained in the sealing agent 16 using a relatively small amount thereof. Furthermore, one kind of material may be injected alone as the absorbent 26 or plural kinds of materials may be injected.

In addition, although shape or size of the absorbent 26 is not particularly limited as long as it is can be injected through the tire valve 14 from which the valve core is taken out, a granular or a powdery absorbent is preferable from the standpoint of the production easiness, the handleability, the injection easiness, the absorbency or the like. When the granular or powdery absorbent 26 is used, a particle diameter is preferably from 1 to 100µm, more preferably from 10 to 80µm, and most preferably from 30 to 50µm. Since such a granular or powdery absorbent 26 does not substantially contain water, it is possible to suppress an increase of the water contained in the sealing agent 16, to perform absorption of the water more efficiently, and to suppress an injection amount of the absorbent 26 to a small amount.

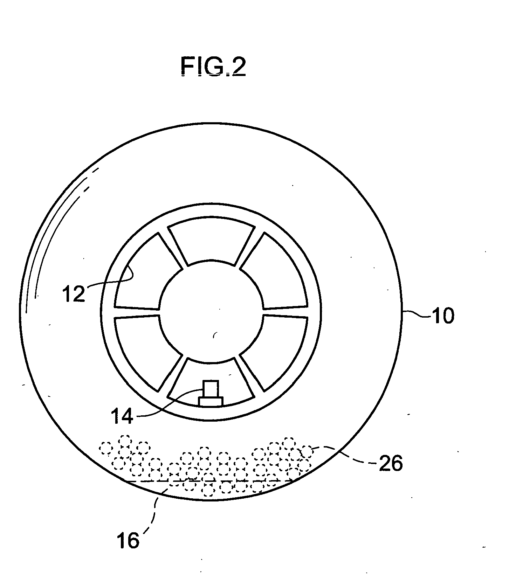

By injecting the above described absorbent 26 into the inside of the tire 10, as shown in Fig. 2, a liquid component such as water in the sealing agent 16 is absorbed into the absorbent 26. The absorbent 26 is injected in an amount that can absorb substantially the total amount of the water (liquid component) contained in the sealing agent 16 in the inside of the tire 10, considering the absorbing ability (absorption amount per unit weight) of the absorbent 26 to the sealing agent 16, the remaining amount of the sealing agent 16 and the like. Here, when the injection amount of the absorbent 26 is small, there is a possibility that the water contained in the sealing agent 16 cannot be absorbed sufficiently or that the absorption takes longer time and thus a decrease in work efficiency is caused. Alternatively, when the injection amount of the absorbent 26 is too large, there is a possibility that although the water contained in the sealing agent 16 can be absorbed in a short time, a waste of the absorbent 26 or an increase in cost is caused. Accordingly, it is preferable that the absorbent 26 is injected in an amount that it can absorb substantially the total amount of the water contained in the sealing agent 16 in the inside of the tire 10 and the waste of the absorbent 26 becomes small.

For example, when rubber latex (SBR-base) in the sealing agent is 30wt% and silica gel is used as the absorbent 26, with respect to the sealing agent of 500g, the silica gel is injected preferably in a range of 10g to 50g, more preferably in a range of 20g to 30g. With such an injection amount, it is possible to absorb the water contained in the sealing agent in a relatively short time and to suppress the waste of the absorbent 26 and the increase in cost.
Furthermore, after the absorbent 26 is injected, for example, by fitting a cock such as a rubber cap into a tire valve 14 and rolling over the tire 10, contact between the absorbent 26 and the sealing agent 16 is promoted and thus absorption of the sealing agent 16 can be accelerated.

### <Recovery of a sealing agent or the like>

After the water contained in the sealing agent 16 is absorbed into the absorbent 26 injected into the inside of the tire 10, the solidified sealing agent 16A (solid component of the sealing agent) and the absorbent 26 which has absorbed the water are recovered from the inside of the tire 10.
For example, when the tire 10, with respect to which a temporary treatment using the sealing agent 16 has been performed, is repaired and then remounted to the vehicle, the rim disengagement is performed to remove the wheel 12 after the absorbent 26 is injected into the inside of the tire 10 to absorb the water contained in the sealing agent 16. At this time, since the water contained in the sealing agent 16 has been absorbed into the absorbent 26, it is possible to prevent the sealing agent 16 from spattering during the rim disengagement operation. After the rim disengagement, by recovering the solidified sealing agent 16A (solid component which is not absorbed into the absorbent) from which the water has been absorbed and the absorbent 26 from the inside wall of the tire 10, the water (liquid component) of the sealing agent 16 absorbed into the absorbent 26 can also be recovered therewith.

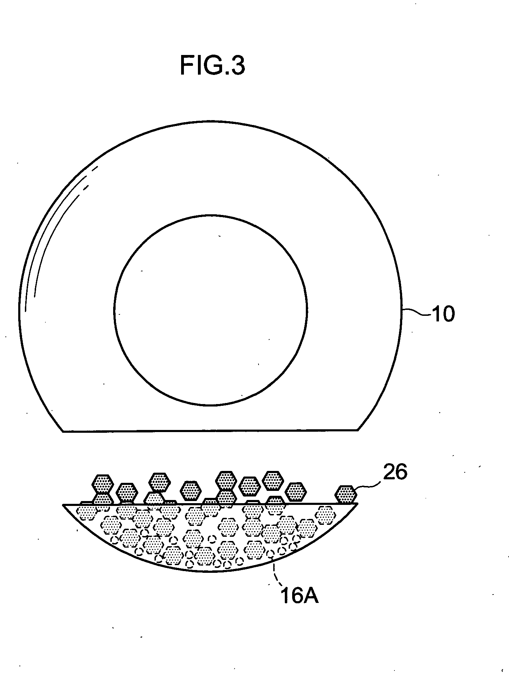

On the other hand, when the punctured tire 10 is subject to a disposal treatment or the like without repair, before or after the rim disengagement, as shown in Fig. 3, a part of the rubber tire 10 may be cut by a cutting tool. This allows the solidified sealing agent 16A and the absorbent 26 which has absorbed the water contained in the sealing agent 16 to be more easily recovered from the cut portion. The rubber tire 10 from which the absorbent 26 or the like has been recovered can also be disposed of by incineration or the like or be recycled.
In addition, the absorbent 26 which has been recovered from the inside of the tire 10 can be collected to, for example, a dedicated disposal tank and be disposed of. Alternatively, it is also possible to perform a treatment in which a liquid component of the sealing agent 16 absorbed into the absorbent 26 is extracted and to reuse the recovered rubber latex.

### Second Embodiment

Although the first embodiment describes a case of recovering the sealing agent which has been solidified by making the water contained in the sealing agent 16 be absorbed into the absorbent 26 and the absorbent which has absorbed the water, the recovery may be performed in a manner in which after a flocculant 40 has been injected into the inside of the tire 10 to agglomerate the rubber latex contained in the sealing agent 16 in advance, the absorbent 26 is injected to absorb the liquid component. That is, a method for recovery of the sealing agent 16 for puncture repair according to the present embodiment includes a step of injecting the flocculant 40 to agglomerate the rubber latex contained in a sealing agent 16 into the inside of a pneumatic tire 10 into which a sealing agent 16 has been injected, a step of injecting an absorbent 26 to absorb a liquid component remaining in the inside of the pneumatic tire 10 into which the flocculant 40 has been injected; and a step of recovering, from the inside of the pneumatic tire 10, the rubber latex which has been agglomerated and solidified by injection of the flocculant 40 and the absorbent 26 which has absorbed the liquid component remaining after injection of the flocculant 40.

### <Injection of flocculant>

After taking out the valve core from the tire valve 14, first, the flocculant 40 is injected into the inside of the tire 10. Although the flocculant 40 is not particularly limited as long as it can agglomerate the rubber latex contained in the sealing agent 16, from the standpoint of wide availability, cost, ease of storage and management or the like, a chemical containing at least one of a salt which is a reaction compound of an acid and a base or a water-soluble organic solvent can be preferably used as the flocculant. Specifically, as the chemical containing the salt which is a reaction compound of an acid and a base, an aqueous solution in which a sodium chloride, a baking soda (a sodium bicarbonate), a potassium chloride or a sodium sulfate are dissolved can be preferably used. In addition, as a chemical containing the water-soluble organic solvent, for example, alcohols such as a methanol, an ethanol, a propanol or the like and an acetone can be preferably used. As a flocculant, a sodium chloride and a potassium chloride are particularly preferable.

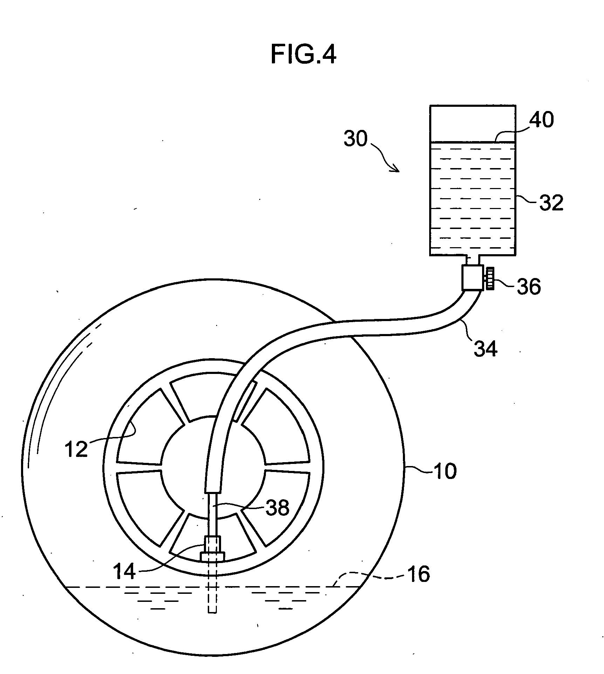

Although the method for injection of the flocculant 40 into the inside of the tire 10 is not particularly limited, it is also possible to insert a liquid flocculant 40 by, for example, using an injecting apparatus shown in Fig. 4 as an alternative to the funnel 18 shown in Fig. 1. The injecting apparatus 30 shown in Fig. 4 includes a chemical liquid tank 32 in which the flocculant 40 is stored and an infusion hose 34 which is connected to the chemical liquid tank 32. The chemical liquid tank 32 is provided with an outlet at its bottom and one end of the infusion hose 34 is connected to the outlet. In addition, an open/close valve 36 to control the injection amount of the flocculant 40 is provided at a connecting portion of the chemical liquid tank 32 and the infusion hose. An injection tube 38 having a diameter which is smaller than the inside diameter of the tire valve 14 is connected to another end of the infusion hose 34, and the injection tube 38 is adapted to be able to be inserted into the inside of the tire 10 through the tire valve 14 from which the valve core has been taken out.

When the injecting apparatus 30 configured as above is used, it is possible to easily inject a predetermined amount of the flocculant 40 into the inside of the tire 10. For example, in a state in which a saturated saline solution (flocculant) is stored in the chemical liquid tank 32, after the valve core is taken out from the tire valve 14, the injection tube 38 is inserted through the tire valve 14 into the inside of the tire 10. At this time, it is preferable that a tip of the injection tube 38 is immersed into the sealing agent 16. Next, the open/close valve 36 is opened so that the flocculant 40 in the chemical liquid tank 32 is injected through the infusion hose 34 and the injection tube 38 into the inside of the tire 10.

An adding amount of the flocculant 40 to the sealing agent 16 is preferably nearer the minimum amount at which substantially the total amount of the rubber latex contained in the sealing agent 16 is agglomerated and a clear liquid component is obtained. The minimum amount of the flocculant 40 is changed depending on the content of the rubber latex in the sealing agent 16. Specifically, in a case in which a rubber latex (SBR-base) in the sealing agent 16 is 30wt%, when a saturated saline solution in an appropriately set amount of 50g to 300g (preferably, 80g to 200g) is added to the sealing agent of 500g, it is possible to separate the sealing agent into a rubber latex and a liquid component.

After adding a predetermined amount of flocculant 40 to the sealing agent 16, a cock such as a rubber cap is, for example, fitted into the tire valve 14 and the tire 10 is rotated.
The sealing agent 16 to which the flocculant 40 has been added is agitated inside of the tire 10 so that the flocculant 40 can be uniformly diffused throughout the sealing agent 16. By addition of the flocculant 40, the effect of a stabilizer (a surfactant or the like) surrounding the surface of the rubber particles of the rubber latex is weakened and the rubber particles are agglomerated, whereby a gel-form solid component is created in the sealing agent 16. When a sufficient time (within about 10 minutes) has passed from the start of creation of the solid component, the sealing agent 16 is separated into a rubber latex which has been solidified to gel form (gelatinized) in the inside of the tire 10 and a liquid component such as the remaining water, an antifreeze liquid or the like.

When the liquid flocculant 40 is used as in this embodiment, it is easily injected into the inside of the tire 10 through the tire valve 14 and, after the injection, it effectively reacts with the sealing agent 16 and flocculates the rubber latex in a short time, which can cause a solid-liquid separation.
However, the flocculant 40 may be added in a solid state of a granule form, a powder form or the like. When the solid state flocculant 40 of a granule form, a powder form or the like is used, it can be reliably injected into the inside of the tire 10 by using the funnel 18 shown in Fig. 1 similarly to the injection of the absorbent 26.

### <Injection of absorbent>

After injecting the flocculant 40 into the inside of the tire 10 to agglomerate the rubber latex, the absorbent 26 is injected. Here, the latex contained in the sealing agent 16 is already solidified, and only the liquid component remaining in the inside of the tire 10 may be absorbed into the absorbent 26. However, in a case in which a liquid flocculant 40 is used, since a liquid component of the sealing agent 16 and a liquid component of the flocculant 40 remain in the inside of the tire 10, the absorbent 26 is injected so that it can absorb substantially the total amount of the two liquid components.

As an absorbent 26 and an injection method to be used, those similar to those in the first embodiment can be employed. Alternatively, an absorbent which has little absorbency to the rubber latex which has been already agglomerated, but can absorb the liquid components remaining in the inside of a tire (a liquid component of the sealing agent and a liquid component of the flocculant) can be preferably used as well.

### <Recovery of rubber latex and absorbent>

After the absorbent 26 is injected and the liquid components are absorbed, the rubber latex which has been agglomerated and solidified (gelatinized) by injection of the flocculant 40 and the absorbent 26 which has absorbed the liquid component remaining after injection of the flocculant 40 are recovered from the inside of the tire 10. As a recovery method, a recovery method similar to that in the first embodiment can be employed. That is, depending on the disposal of the tire after recovery, the recovery may be performed by rim disengagement or the recovery of the rubber latex and the absorbent 26 in the inside of the tire 10 may be performed by cutting the tire 10 before or after the rim disengagement.

Then, at the time of recovery, the latex contained in the sealing agent 16 is solidified to gel form, and the liquid component is absorbed into the absorbent 26. Accordingly, it is possible to prevent the sealing agent 16 from spattering at a time of rim disengagement and to separately recover the agglomerated gel-form rubber latex and the liquid component which has been absorbed into the absorbent 26 . Typically, since the absorbent 26 which has absorbed the liquid component swells, when the recovered absorbent 26 and the gelatinized rubber latex (rubber particles) have a very different size, for example, it is possible to recover them separately by screening or the like. Alternatively, it may be possible to discriminate the rubber latex and the absorbent 26 by centrifugal separation.

The recovered rubber latex can be reused (recycled) as rubber raw material after being subject to, for example, removal of impurities, dewatering, drying or the like, and can be disposed by incineration, landfill or the like after being subject to dewatering or drying. On the other hand, the absorbent 26 may be disposed of or may be reused by drying the absorbent to evaporate the liquid component since the absorbent 26 has basically absorbed only the liquid component.

In the above described method for recovery of the sealing agent 16 according to the present embodiment, the flocculant 40 is injected into the inside of the tire 10 into which the sealing agent 16 has been injected and then mixed with the sealing agent 16, so that the rubber latex is agglomerated from the sealing agent 16 and solidified (gelatinized). Next, the absorbent 26 is injected to absorb the liquid component remaining in the inside of the tire 10. According to this manner, it is possible to efficiently separate the used sealing agent 16 into a solid component (rubber latex) and a liquid component in the inside of the tire 10 and, additionally, to prevent the sealing agent 16 from spattering outward and becoming attached to a worker or the working facility or the like when removing the tire 10 from the rim of the wheel 12. Furthermore, since it is possible to separately recover the rubber latex and the liquid component contained in the sealing agent 16, subsequent treatments can be easily performed.

In addition, when a saturated saline solution is used as the flocculant 40, since the rubber latex and the liquid component which are solid-liquid separated from the sealing agent 16 have almost no harmfulness such as strong acidity or strong alkaline property or the like, it is possible to simply perform a detoxifying process or the like to the recovered rubber latex and the absorbent 26. In addition, since the saturated saline solution is also low in the cost and does not require the exercising of special attention to storage and management, it is possible to suppress a recovery cost of the sealing agent 16 to be low.

### Examples

Hereinafter, the present invention will be described with reference to examples and comparative examples, but the present invention is not limited by these examples.

### <Examples and comparative examples>

A sealing agent (SBR rubber latex 30wt%) for puncture repair of 500g is injected into the rim engaged tire (tire: 225/40R18, rim: 18 inch) and, after taking out the valve core from tire valve, the flocculant/absorbent is injected in a state in which the funnel is inserted into the valve inlet as shown in Fig. 1. After the injection, the presence/absence of leakage of the sealing agent at a time of rim disengagement was evaluated by using a tire changer (TC-520 manufactured by QUSHIDA).
The flocculant and absorbent used and evaluated results are shown in table 1.

**Table 1**

| | Flocculant | | Absorbent | | Sealing agent leakage during rim disengagement |
|---|---|---|---|---|---|
| | Kinds | (g/per sealing agent 500g) | Kinds | (g/per sealing agent 500g) | |
| Example 1 | - | - | Sodium polyacrylate | 50g | Absence |
| Example 2 | - | - | Carboxymethyl cellulose | 25g | Absence |
| Example 3 | - | - | Silica gel | 100g | Absence |
| Example 4 | - | - | Calcium carbonate | 70g | Absence |
| Example 5 | - | - | Polyamide | 60g | Absence |
| Example 6 | Saturated saline solution | 100g | Sodium polyacrylate | 75g | Absence |
| Example 7 | Saturated saline solution | 100g | Carboxymethyl cellulose | 30g | Absence |
| Example 8 | Saturated saline solution | 100g | Silica gel | 85g | Absence |
| Example 9 | Saturated saline solution | 100g | Calcium carbonate | 60g | Absence |
| Example 10 | Saturated saline solution | 100g | Polyamide | 55g | Absence |
| Comparative Example 1 | Absence | | Absence | | Presence |

Although a method of recovering a sealing agent used for puncture repair according to the present invention is described in the foregoing, the invention is not limited to the above embodiments. For example, the means for injecting the absorbent or flocculant into the inside of the tire is not limited to that shown in the drawings and can be appropriately selected depending on the form of the absorbent or the flocculant or the like.

## Claims

1. A method of recovering a sealing agent used for puncture repair, the method comprising:
injecting an absorbent into the inside of a pneumatic tire into which the sealing agent used for puncture repair has been injected, the sealing agent comprising a rubber latex dispersed in a liquid component and the absorbent absorbing water contained in the sealing agent; and
recovering, from the inside of the pneumatic tire, the solidified sealing agent and the absorbent which has absorbed the water.

2. A method of recovering a sealing agent used for puncture repair, the method comprising:
injecting a flocculant into the inside of a pneumatic tire into which the sealing agent used for puncture repair has been injected, the sealing agent comprising a rubber latex dispersed in a liquid component and the flocculant agglomerating the rubber latex;
injecting an absorbent into the inside of the pneumatic tire into which the flocculant has been injected, the absorbent absorbing any remaining liquid of the liquid component; and
recovering, from the inside of the pneumatic tire, the rubber latex which has been agglomerated and solidified by injection of the flocculant and the absorbent which has absorbed the liquid component remaining after injection of the flocculant.

3. The method according to claim 1, wherein any of silica gel, calcium carbonate, polyamide, carboxymethylcellulose or polyacrylate is injected as the absorbent.

4. The method according to claim 2, wherein any of silica gel, calcium carbonate, polyamide, carboxymethylcellulose or polyacrylate is injected as the absorbent.

5. The method according to claim 2, wherein a chemical containing at least one of a salt that is a reaction compound of an acid and a base or a water-soluble organic solvent is injected as the flocculant.

6. The method according to claim 3, wherein a chemical containing at least one of a salt that is a reaction compound of an acid and a base or a water-soluble organic solvent is injected as the flocculant.

7. The method according to claim 4, wherein a chemical containing at least one of a salt that is a reaction compound of an acid and a base or a water-soluble organic solvent is injected as the flocculant.

## Amended claims

### Amended claims under Art. 19.1 PCT

1. A method of recovering a sealing agent used for puncture repair, the method comprising:
injecting an absorbent into the inside of a pneumatic tire into which the sealing agent used for puncture repair has been injected, the sealing agent comprising a rubber latex dispersed in a liquid component and the absorbent absorbing water contained in the sealing agent; and
recovering, from the inside of the pneumatic tire, the solidified sealing agent and the absorbent which has absorbed the water.

2. A method of recovering a sealing agent used for puncture repair, the method comprising:
injecting a flocculant into the inside of a pneumatic tire into which the sealing agent used for puncture repair has been injected, the sealing agent comprising a rubber latex dispersed in a liquid component and the flocculant flocculating the rubber latex;
injecting an absorbent into the inside of the pneumatic tire into which the flocculant has been injected, the absorbent absorbing any remaining liquid of the liquid component; and
recovering, from the inside of the pneumatic tire, the rubber latex which has been agglomerated and solidified by injection of the flocculant and the absorbent which has absorbed the liquid component remaining after injection of the flocculant.

3. The method according to claim 1, wherein any of silica gel, calcium carbonate, polyamide, carboxymethylcellulose or polyacrylate is injected as the absorbent.

4. The method according to claim 2, wherein any of silica gel, calcium carbonate, polyamide, carboxymethylcellulose or polyacrylate is injected as the absorbent.

5. The method according to claim 2, wherein a chemical containing at least one of a salt that is a reaction compound of an acid and a base or a water-soluble organic solvent is injected as the flocculant.

6. (canceled)

7. The method according to claim 4, wherein a chemical containing at least one of a salt tha t is a reaction compound of an acid and a base or a water-soluble organic solvent is injected as the flocculant.
